# EUROPEAN PATENT APPLICATION

(11) **EP 4 852 270 A1**
(43) Date of publication of application: **09.12.2026**
(21) Application number: 25842436.5
(22) Date of filing: 04.12.2025
(51) Int. Cl.: H02J 3/38, G06F 17/11

(54) **NODE EQUIVALENT INERTIA DETERMINATION METHOD AND SYSTEM FOR POWER SYSTEM**

(30) Priority: 14.02.2025 CN 202510165763
(71) Applicant: Electric Power Research Institute of State Grid Shanxi Electric Power Co., Ltd, Taiyuan, Shanxi 030001 (CN); Taiyuan University of Technology, Taiyuan, Shanxi 030024 (CN)
(72) Inventor: LV, Shixuan, Taiyuan, Shanxi 030001 (CN); WANG, Wei, Taiyuan, Shanxi 030001 (CN); YANG, Dong, Taiyuan, Shanxi 030001 (CN); ZHENG, Lijun, Taiyuan, Shanxi 030024 (CN); LIU, Zongwei, Taiyuan, Shanxi 030024 (CN); YANG, Dongdong, Taiyuan, Shanxi 030001 (CN); CHENG, Yinzhang, Taiyuan, Shanxi 030001 (CN); XU, Yudong, Taiyuan, Shanxi 030001 (CN); TANG, Zhen, Taiyuan, Shanxi 030001 (CN)
(74) Representative: Linage González, Rafael
(86) International application number: PCT/CN2025/140121
(87) International publication number: WO 2026/170817

(57) **Abstract**

Provided are a method and system for determining node equivalent inertia of a power system. The method for determining node equivalent inertia of a power system includes: determining equivalent inertia of the power system; applying a load power disturbance to multiple nodes in the power system to determine one node in the power system as an inertia center node using frequencies of the multiple nodes after the disturbance is applied; fitting the frequencies of the multiple nodes after the load power disturbance is applied in the power system into a curve of frequency changing with time to determine frequency change rates of the multiple nodes after the disturbance occurs; and calculating equivalent inertia of a target node according to a relationship between a frequency change rate of the target node after the disturbance occurs and a frequency change rate of the inertia center node after the disturbance occurs and the equivalent inertia of the power system.

## Description

This application claims priority to Chinese Patent Application No. 202510165763.X filed with the China National Intellectual Property Administration (CNIPA) on Feb. 14, 2025, the disclosure of which is incorporated herein by reference in its entirety.

### TECHNICAL FIELD

The present application belongs to the technical field of power systems and relates to, for example, a method and system for determining node equivalent inertia of a power system.

### BACKGROUND

With the increasing penetration of renewable energy installations, the power system is shifting from a traditional structure dominated by synchronous energy to a new model dominated by a high proportion of non-synchronous energy. Since renewable energy installations are limited by climates and geographical environments, renewable energy units are generally distributed in clusters, thereby causing a significant reduction in local regional inertia levels and an increasingly apparent characteristic of non-uniform distribution of inertia, seriously worsening the frequency stability of the power system and increasing the risk of frequency instability of the power system. Therefore, accurately evaluating the node equivalent inertia of the power system helps power grid dispatchers to grasp the current actual inertia distribution and rationally allocate the system reserve capacity and virtual inertia resources, which is of great significance for improving the frequency stability and ensuring the safe operation of the power grid.

The methods for evaluating node equivalent inertia are mainly classified into two categories: a method for evaluating node equivalent inertia based on a model analysis method and a method for evaluating node equivalent inertia based on a frequency response analysis method. The method for evaluating node equivalent inertia based on the model analysis method mainly involves acquiring the real-time topology of the system and the inertia parameters and parameters such as node voltage amplitudes and phase angles of a synchronous generator and a new energy generator through synchronous phasor measurement units (PMUs), and deriving the node equivalent inertia according to the swing equation and the synchronous power equation. The accuracy of this type of evaluation method depends on many types of data obtained through PMUs. A huge number of data are needed, the calculation is complex, and the applicability is relatively poor. The method for evaluating node equivalent inertia based on the frequency response analysis method involves using the frequency data of multiple nodes for fitting after the multiple nodes are subjected to a power disturbance to obtain the frequency change rates at the initial moment of the disturbance and obtain the node equivalent inertia according to the coupling relationship between the frequency change rate of the node and the equivalent inertia of the node. However, the fitting method mainly adopts polynomial fitting, which is single in form and cannot fully reflect the frequency dynamic response after the disturbance is applied, resulting in relatively low fitting accuracy of a frequency curve, which is difficult to apply to practical engineering.

### SUMMARY

The present application provides a method and system for determining node equivalent inertia of a power system.

The present application provides a method for determining node equivalent inertia of a power system. The method includes the steps described below.

Equivalent inertia of the power system is determined.

A load power disturbance is applied to multiple nodes in the power system to determine one node in the power system as an inertia center node using frequencies of the multiple nodes after the disturbance is applied.

The frequencies of the multiple nodes after the load power disturbance is applied in the power system are fitted into a curve of frequency changing with time to determine frequency change rates of the multiple nodes after the disturbance occurs.

Equivalent inertia of a target node is calculated according to a relationship between a frequency change rate of the target node after the disturbance occurs and a frequency change rate of the inertia center node after the disturbance occurs and the equivalent inertia of the power system.

In an embodiment, determining the equivalent inertia of the power system includes the step described below.

The equivalent inertia H_{sys} of the power system is calculated according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$ where H_{g,i} is an inertia constant of a synchronous generator i, S_{g,i} is a rated capacity of the synchronous generator i, I is the total number of synchronous generators, H_{v,j} is an inertia constant of a new energy generator j with virtual inertia control technology, S_{v,j} is a rated capacity of the new energy generator j with the virtual inertia control technology, J is the total number of new energy generators with the virtual inertia control technology, Hₚ is an inertia constant of a load, Sₚ is a rated capacity of the load, S_{v,k} is a rated capacity of a new energy generator k without the virtual inertia control technology, and K is the total number of new energy generators without the virtual inertia control technology.

In an embodiment, applying the load power disturbance to the multiple nodes in the power system to determine the one node in the power system as the inertia center node using the frequencies of the multiple nodes after the disturbance is applied and use a frequency of the inertia center node as a frequency of the power system includes the steps described below.

A Pearson correlation coefficient of a frequency of each of the multiple nodes after the disturbance is applied and a frequency of another node of the multiple nodes after the disturbance is applied is calculated according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$ where P_{fm,fn} is a Pearson correlation coefficient of a frequency fₘ of a node m after the disturbance is applied and a frequency fₙ of a node n after the disturbance is applied in the power system, U is the total number of frequency sequences in a frequency of a node after the disturbance is applied, fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ.

A sum of Pearson correlation coefficients of each of the multiple nodes is calculated according to the following formula: ${P}_{m} = {\sum }_{n = 1 , n \neq m}^{s} {P}_{{f}_{m} {, f}_{n}} ;$ where Pₘ is a sum of Pearson correlation coefficients of the node m, and s is the total number of nodes in the power system.

A node with a largest sum of Pearson correlation coefficients in the power system is used as the inertia center node.

In an embodiment, fitting the frequencies of the multiple nodes after the load power disturbance is applied in the power system into the curve of frequency changing with time to determine the frequency change rates of the multiple nodes after the disturbance occurs includes the steps described below.

A frequency fₘ of a node m is acquired, where fₘ = {fₘ₁, fₘ₂, ..., f_{mU}}, and U is the total number of frequency sequences in the frequency of the node after the disturbance is applied.

Multiple fitting models are constructed, including a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function.

A residual quadratic sum is used as a target function in an iterative process of a target fitting model to solve a coefficient of the target fitting model. When a change in the residual quadratic sum is less than a first preset value, or when an absolute value of a gradient is less than a second preset value, or when the maximum allowable number of iterations is reached, a coefficient of the target fitting model at the current number of iterations is output.

A fitting error ε of the target fitting model is calculated according to the following formula: $ε = {\sum }_{u = 1}^{U} \left|{f}_{mu}-{f}_{mu}^{′}\right| ;$ where fₘᵤ is a u-th frequency sequence in fₘ, and ${f}_{max}^{′}$ is a u-th frequency sequence fitted at the node m by the target fitting model.

Fitting errors of multiple fitting models under multiple order polynomials within a target order are acquired.

A fitting model corresponding to a minimum fitting error within the target order is used as a final fitting model, where an order of the final fitting model is an order corresponding to the minimum fitting error.

A frequency change rate of the node m after the disturbance occurs is determined according to the frequency of the node m and the final fitting model of the node m.

In an embodiment, calculating the equivalent inertia of the target node according to the relationship between the frequency change rate of the target node after the disturbance occurs and the frequency change rate of the inertia center node after the disturbance occurs and the equivalent inertia of the power system includes the step described below.

The equivalent inertia of the target node is calculated according to the following formula: ${H}_{q} = {H}_{sys} {lim}_{t \to 0} \frac{\frac{{df}_{sys}}{dt}}{\frac{{df}_{q}}{dt}} ;$ where H_{q} is equivalent inertia of a target node q in the power system, H_{sys} is the equivalent inertia of the power system, f_{sys} is a frequency of the inertia center node, t is time, f_{q} is a frequency of the target node q after the target node q is subjected to the load power disturbance, $\frac{{df}_{q}}{dt}$ denotes a frequency change rate of the target node q after the disturbance occurs, and $\frac{{df}_{sys}}{dt}$ denotes the frequency change rate of the inertia center node after the disturbance occurs.

In a second aspect, the present application provides a system for determining node equivalent inertia of a power system. The system includes a first determination module, a second determination module, a third determination module and a calculation module.

The first determination module is configured to determine equivalent inertia of the power system.

The second determination module is configured to apply a load power disturbance to multiple nodes in the power system to determine one node in the power system as an inertia center node using frequencies of the multiple nodes after the disturbance is applied.

The third determination module is configured to fit the frequencies of the multiple nodes after the load power disturbance is applied in the power system into a curve of frequency changing with time to determine frequency change rates of the multiple nodes after the disturbance occurs.

The calculation module is configured to calculate equivalent inertia of a target node according to a relationship between a frequency change rate of the target node after the disturbance occurs and a frequency change rate of the inertia center node after the disturbance occurs and the equivalent inertia of the power system.

In an embodiment, the first determination module includes a first calculation unit.

The first calculation unit is configured to calculate the equivalent inertia H_{sys} of the power system according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$ where H_{g,i} is an inertia constant of a synchronous generator i, S_{g,i} is a rated capacity of the synchronous generator i, I is the total number of synchronous generators, H_{v,j} is an inertia constant of a new energy generator j with virtual inertia control technology, S_{v,j} is a rated capacity of the new energy generator j with the virtual inertia control technology, J is the total number of new energy generators with the virtual inertia control technology, Hₚ is an inertia constant of a load, Sₚ is a rated capacity of the load, S_{v,k} is a rated capacity of a new energy generator k without the virtual inertia control technology, and K is the total number of new energy generators without the virtual inertia control technology.

In an embodiment, the second determination module includes a second calculation unit, a third calculation unit and a first determination unit.

The second calculation unit is configured to calculate a Pearson correlation coefficient of a frequency of each of the multiple nodes after the disturbance is applied and a frequency of another node of the multiple nodes after the disturbance is applied according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$ where P_{fm , fn} is a Pearson correlation coefficient of a frequency fₘ of a node m after the disturbance is applied and a frequency fₙ of a node n after the disturbance is applied in the power system, U is the total number of frequency sequences in a frequency of a node after the disturbance is applied, fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ.

The third calculation unit is configured to calculate a sum of Pearson correlation coefficients of each of the multiple nodes according to the following formula: ${P}_{m} = {\sum }_{n = 1 , n \neq m}^{s} {P}_{{f}_{m} {, f}_{n}} ;$ where Pₘ is a sum of Pearson correlation coefficients of the node m, and s is the total number of nodes in the power system.

The first determination unit is configured to use a node with a largest sum of Pearson correlation coefficients in the power system as the inertia center node.

In an embodiment, the third determination module includes a first acquisition unit, a construction unit, a coefficient solving unit, a fourth calculation unit, a second acquisition unit, a second determination unit and a third determination unit.

The first acquisition unit is configured to acquire a frequency fₘ of a node m, where fₘ = {fₘ₁, fₘ₂, ..., f_{mU}}, and U is the total number of frequency sequences in the frequency of the node after the disturbance is applied.

The construction unit is configured to construct multiple fitting models, including a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function.

The coefficient solving unit is configured to use a residual quadratic sum as a target function in an iterative process of a target fitting model to solve a coefficient of the target fitting model. When a change in the residual quadratic sum is less than a first preset value, or when an absolute value of a gradient is less than a second preset value, or when the maximum allowable number of iterations is reached, a coefficient of the target fitting model at the current number of iterations is output.

The fourth calculation unit is configured to calculate a fitting error ε of the target fitting model according to the following formula: $ε = {\sum }_{u = 1}^{U} \left|{f}_{mu}-{f}_{mu}^{′}\right| ;$ where fₘᵤ is a u-th frequency sequence in fₘ, and ${f}_{mn}^{′}$ is a u-th frequency sequence fitted at the node m by the target fitting model.

The second acquisition unit is configured to acquire fitting errors of multiple fitting models under multiple order polynomials within a target order.

The second determination unit is configured to use a fitting model corresponding to a minimum fitting error within the target order as a final fitting model, where an order of the final fitting model is an order corresponding to the minimum fitting error.

The third determination unit is configured to determine a frequency change rate of the node m after the disturbance occurs according to the frequency of the node m and the final fitting model of the node m.

In an embodiment, the calculation module includes a fifth calculation unit.

The fifth calculation unit is configured to calculate the equivalent inertia of the target node according to the following formula: ${H}_{q} = {H}_{sys} {lim}_{t \to 0} \frac{\frac{{df}_{sys}}{dt}}{\frac{{df}_{q}}{dt}} ;$ where H_{q} is equivalent inertia of a target node q in the power system, H_{sys} is the equivalent inertia of the power system, f_{sys} is a frequency of the inertia center node, t is time, f_{q} is a frequency of the target node q after the target node q is subjected to the load power disturbance, $\frac{{df}_{q}}{dt}$ denotes a frequency change rate of the target node q after the disturbance occurs, and $\frac{{df}_{sys}}{dt}$ denotes the frequency change rate of the inertia center node after the disturbance occurs.

### BRIEF DESCRIPTION OF DRAWINGS

FIG. 1 is a flowchart of a method for determining node equivalent inertia of a power system according to an embodiment of the present application.
FIG. 2 is a topology diagram of an improved IEEE39 node according to an embodiment of the present application.
FIG. 3 is a virtual geographical information diagram of an improved IEEE39 node according to an embodiment of the present application.
FIG. 4 is a visualization diagram of inertia space distribution according to an embodiment of the present application.
FIG. 5 is a diagram illustrating the structure of a system for determining node equivalent inertia of a power system according to an embodiment of the present application.
FIG. 6 is a diagram illustrating the hardware structure of an electronic device according to an embodiment of the present application.

### DETAILED DESCRIPTION

### Embodiment one

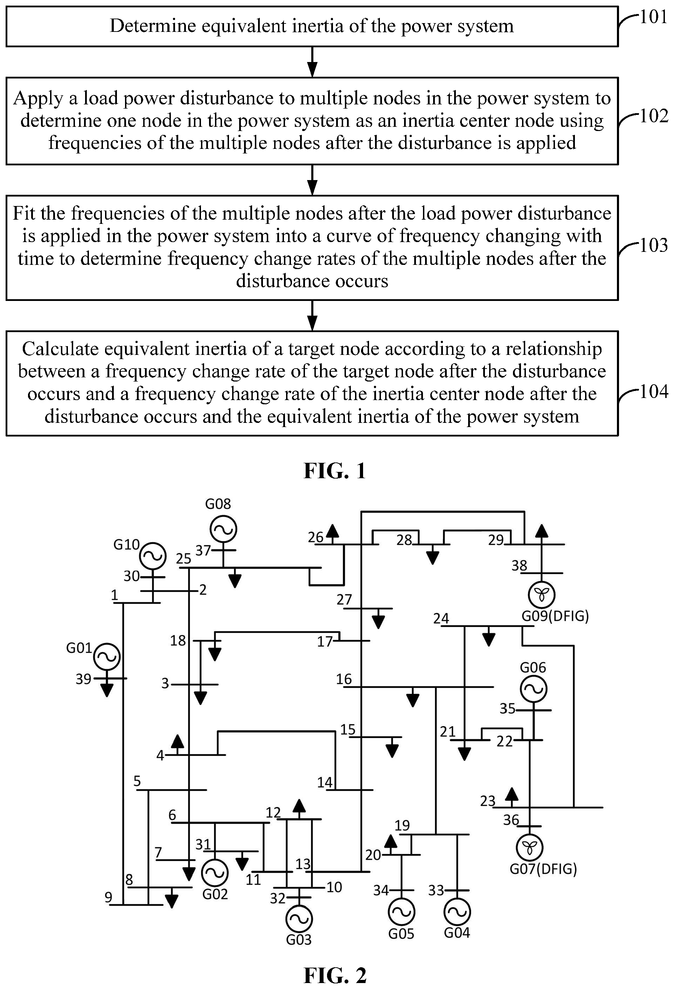

As shown in FIG. 1, this embodiment provides a method for determining node equivalent inertia of a power system. The method includes the steps described below.

In step 101, equivalent inertia of the power system is determined.

For example, the equivalent inertia H_{sys} of the power system is calculated according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$ where H_{g,i} is an inertia constant of a synchronous generator i, S_{g,i} is a rated capacity of the synchronous generator i, I is the total number of synchronous generators, H_{v,j} is an inertia constant of a new energy generator j with virtual inertia control technology, S_{v,j} is a rated capacity of the new energy generator j with the virtual inertia control technology, J is the total number of new energy generators with the virtual inertia control technology, Hₚ is an inertia constant of a load, Sₚ is a rated capacity of the load, S_{v,k} is a rated capacity of a new energy generator k without the virtual inertia control technology, and K is the total number of new energy generators without the virtual inertia control technology.

In step 102, a load power disturbance is applied to multiple nodes in the power system to determine a node in the power system as an inertia center node using frequencies of the multiple nodes after the disturbance is applied.

For a new power system with s nodes, frequency data of the multiple nodes after the disturbance is applied are f₁, f₂, ..., fₛ, where f₁ = {f₁₁, f₁₂, ..., f_{1U}}, f₂ = {f₂₁, f₂₂, ..., f_{2U}}, ..., fₛ = {fₛ₁, fₛ₂, ..., f_{sU}}.

A Pearson correlation coefficient of a frequency of each of the multiple nodes after the disturbance is applied and a frequency of another node of the multiple nodes after the disturbance is applied is calculated according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$ where P_{fm , fn} is a Pearson correlation coefficient of a frequency fₘ of a node m after the disturbance is applied and a frequency fₙ of a node n after the disturbance is applied in the power system, U is the total number of frequency sequences in a frequency of a node after the disturbance is applied (each node has the same number of frequency sequences), fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ.

A sum of Pearson correlation coefficients of each of the multiple nodes is calculated according to the following formula: ${P}_{m} = {\sum }_{n = 1 , n \neq m}^{s} {P}_{{f}_{m} {, f}_{n}} ;$ where Pₘ is a sum of Pearson correlation coefficients of the node m, and s is the total number of nodes in the power system.

In the power system, if a sum of Pearson correlation coefficients of a node is larger, it indicates that a frequency of the node is most similar to a frequency of another node in the power system, which can better represent a frequency f_{sys} of the power system. After the sum of Pearson correlation coefficients of each node is obtained, a node with the largest sum of Pearson correlation coefficients is used as the inertia center node. A frequency of the inertia center node is the frequency f_{sys} of the power system, and node inertia of the inertia center node is the equivalent inertia H_{sys} of the power system.

In step 103, the frequencies of the multiple nodes after the load power disturbance is applied in the power system are fitted into a curve of frequency changing with time to determine frequency change rates of the multiple nodes after the disturbance occurs.

The frequency data acquired at the node m is denoted as fₘ = {fₘ₁, fₘ₂, ..., f_{mU}}, and the discrete frequency data points acquired at the node m are fitted to be continuous for calculating a frequency change rate of the node m at the initial moment. Multiple fitting models are constructed. The output of a fitting model is a column vector composed of frequency data points acquired at a node, and the input of a fitting model is a column vector composed of time corresponding to each frequency data point, that is, *ẏ* is a column vector composed of the frequency data points acquired at the node m by a target fitting model, ẏ=[fₘ₁,fₘ₂,...,f_{mU}]^{T}, T represents the transposition of a matrix, and ẋ is a column vector composed of time corresponding to each frequency data point of the node m, ẋ=[t₁,t₂,···,t_{U}]^{T}.

For example, this step includes the steps described below.

A frequency fₘ of a node m is acquired, where fₘ = {fₘ₁, fₘ₂, ..., f_{mU}}, and U is the total number of frequency sequences in the frequency of the node after the disturbance is applied.

Multiple fitting models are constructed, including a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function.

For example, the high-order polynomial is ẏ=a₀+a₁ẋ+···+a_{w-1}ẋ^{w-1}+a_{w}ẋ^{w}, where a₀, a₁, ..., a_{w-1} and a_{w} are coefficients of corresponding terms in the high-order polynomial, respectively, and w is an order of the polynomial. In this embodiment, 2 ≤ w ≤ 10.

The exponential function is ẏ=b₀e^{b1ẋ+b2}, where b₀, b₁ and b₂ are preset coefficients, and e is a natural constant.

The logarithmic function is ẏ=b₃ln(b₄ẋ+b₅), where b₃, b₄ and b₅ are preset coefficients.

The power function is ẏ=(b₆ẋ+b₇)^{b8}, where b₆, b₇ and b₈ are preset coefficients.

The Gaussian function is $\dot{y} = {b}_{9} {e}^{- \frac{{\left(\dot{x}-{b}_{10}\right)}^{2}}{2 {b}_{11}^{2}}}$, where b₉, b₁₀ and b₁₁ are preset coefficients, and e is a natural constant.

The Sigmoid function is $\dot{y} = \frac{{b}_{12}}{1 + {e}^{- {b}_{13} \dot{x} + {b}_{14}}}$, where b₁₂, b₁₃ and b₁₄ are preset coefficients, and e is a natural constant.

The combination of the high-order polynomial and the logarithmic function is high-order polynomial+logarithmic function, the combination of the high-order polynomial and the power function is high-order polynomial+power function, the combination of the high-order polynomial and the Gaussian function is high-order polynomial+Gaussian function, and the combination of the high-order polynomial and the Sigmoid function is high-order polynomial+Sigmoid function.

The combination of the high-order polynomial and the logarithmic function is used as an example. High-order polynomial+logarithmic function, that is, ẏ=a₀+a₁ẋ+···+a_{w-1}x·^{w-1}+a_{w}ẋ^{w} + b₀e^{b1ẋ+b2}.

A residual quadratic sum is used as a target function in an iterative process of a target fitting model to solve a coefficient of the target fitting model. When a change in the residual quadratic sum is less than a first preset value, or when an absolute value of a gradient is less than a second preset value, or when the maximum allowable number of iterations is reached, the iteration is stopped, and a coefficient of the target fitting model at the current number of iterations is output.

To obtain the frequency change rate of the node at the initial moment after the node is disturbed, it can be seen that frequency data points at the initial moment have a relatively significant effect on the calculation of the frequency change rate at the initial moment. To make the fitting accuracy of the curve at the initial moment higher, a progressively decreased weight is applied to the target fitting model, and the fitting of the frequency data at the initial moment is prioritized, that is: $minr = {10}^{0} {\left({f}_{m 1}-{f}_{m 1}^{′}\right)}^{2} + {10}^{- 0.01} {\left({f}_{m 2}-{f}_{m 2}^{′}\right)}^{2} + ⋯ + {10}^{- 0.01 \left(U-1\right)} {\left({f}_{mU}-{f}_{mU}^{′}\right)}^{2} ;$ where r is a residual.

A fitting error ε of the target fitting model is calculated according to the following formula: $ε = {\sum }_{u = 1}^{U} \left|{f}_{mu}-{f}_{mu}^{′}\right| ;$ where fₘᵤ is a u-th frequency sequence in fₘ, and ${f}_{mn}^{′}$ is a u-th frequency sequence fitted at the node m by the target fitting model.

Fitting errors of multiple fitting models under multiple order polynomials within a target order are acquired.

A fitting model corresponding to a minimum fitting error within the target order is used as a final fitting model, where an order of the final fitting model is an order corresponding to the minimum fitting error.

To save computational resources, for example, to make the curve of fitting the data points have a faster generation speed and a smaller error, the frequency data of each node after the disturbance is applied is fed into each fitting model. Firstly, let w = 2. A second-order polynomial single model structure and five multi-model structures are used for fitting curves. The five multi-model structures are a combination of a second-order polynomial and an exponential function, a combination of a second-order polynomial and a logarithmic function, a combination of a second-order polynomial and a power function, a combination of a second-order polynomial and a Gaussian function and a combination of a second-order polynomial and a Sigmoid function, respectively. The fitting errors of the six fitting models are calculated. The model structure and model coefficient of the model with the minimum fitting error are saved. The fitting error of this model is used as the minimum model error. Then, let w = 3. A third-order polynomial single model structure and five multi-model structures are used for fitting curves. The five multi-model structures are a combination of a third-order polynomial and an exponential function, a combination of a third-order polynomial and a logarithmic function, a combination of a third-order polynomial and a power function, a combination of a third-order polynomial and a Gaussian function and a combination of a third-order polynomial and a Sigmoid function, respectively. The fitting errors of the six fitting models are calculated. If the fitting errors of the six models are all greater than the minimum model error saved for the previous order, the loop is ended, and the model structure and the model coefficient which are saved for the previous order are output. Otherwise, if the minimum error of the six models is less than the minimum model error saved for the previous order, the model structure and the model coefficient are saved, the fitting error of this model is used as the minimum model error, the process proceeds to the next loop, let w = 4, and the loop is ended until w = 10. When the polynomial order is 10, the model structure and the model coefficient of the model with the minimum fitting error among the six models at the 10^{th} order are output.

A frequency change rate of the node m after the disturbance occurs is determined according to the frequency of the node m and the final fitting model of the node m.

In step 104, equivalent inertia of a target node is calculated according to a relationship between a frequency change rate of the target node after the disturbance occurs and a frequency change rate of the inertia center node after the disturbance occurs and the equivalent inertia of the power system.

According to a motion equation of a rotor of a generator, after the node of the power system is subjected to the power disturbance, the frequency change rate of the node is inversely proportional to the equivalent inertia of the node, that is: ${2 H}_{q} \frac{{df}_{q}}{dt} = {ΔP}_{L} ;$ where H_{q} is equivalent inertia of a target node q in the power system, f_{q} is a frequency of the target node q after the target node q is subjected to the load power disturbance, and ΔP_{L} is load disturbance power.

A load power disturbance with the same magnitude is applied to each of the multiple nodes, and the load power disturbance of each of the multiple nodes is equal in magnitude at the initial moment of the disturbance, that is: ${2 H}_{q} \frac{{df}_{q}}{dt} = {ΔP}_{L} = 2 {H}_{o} \frac{{df}_{o}}{dt} ;$ where Hₒ is equivalent inertia of a target node o in the power system, and fₒ is a frequency of the target node o after the target node o is subjected to the load power disturbance.

The equivalent inertia of the target node is calculated according to the following formula: ${H}_{q} = {H}_{sys} {lim}_{t \to 0} \frac{\frac{{df}_{sys}}{dt}}{\frac{{df}_{q}}{dt}} ;$ where H_{q} is equivalent inertia of a target node q in the power system, H_{sys} is the equivalent inertia of the power system, f_{sys} is a frequency of the inertia center node, t is time, f_{q} is a frequency of the target node q after the target node q is subjected to the load power disturbance, $\frac{{df}_{q}}{dt}$ denotes a frequency change rate of the target node q after the disturbance occurs, and $\frac{{df}_{sys}}{dt}$ denotes the frequency change rate of the inertia center node after the disturbance occurs.

The method for determining node equivalent inertia of a power system provided in this embodiment further includes presenting the spatial distribution characteristics of the inertia of the power system in the form of a heat map according to the node equivalent inertia of the multiple nodes in the power system obtained in step 104.

The spatial distribution characteristics of the inertia are visualized in conjunction with the geographic location information of a power grid, a bicubic interpolation algorithm is used for performing difference processing on multiple points in a network topology of the power system, and a Delaunay triangulation algorithm is used for visualizing the spatial characteristics of the node equivalent inertia.

To make the solution of this embodiment clearer, this embodiment discloses examples.

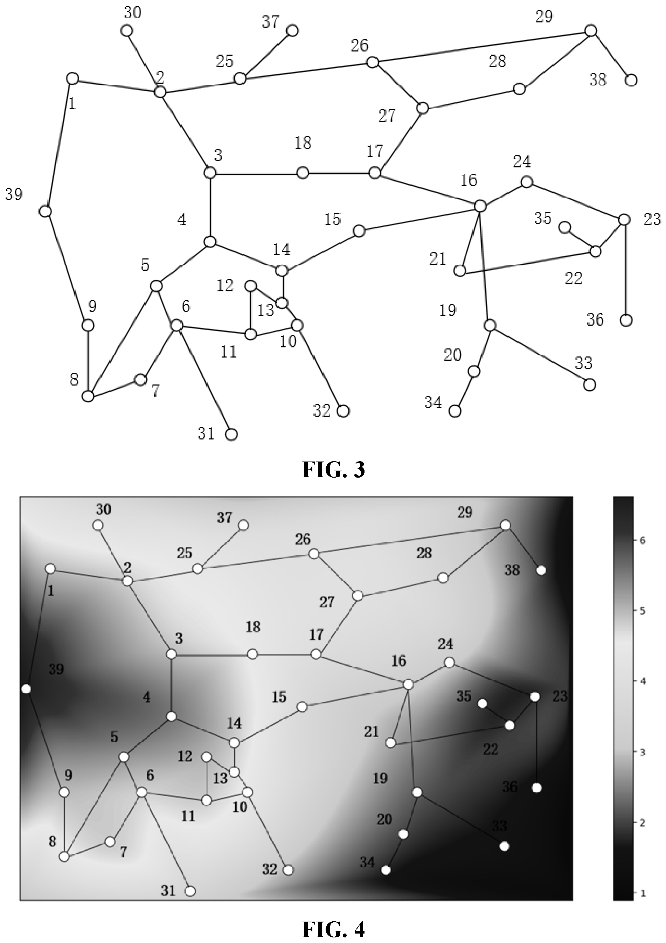

The power system in this embodiment adopts an improved IEEE39 node system. A topology of the system is shown in FIG. 2. The system has 10 generators, 39 buses, 19 loads and a rated frequency of 50 Hz. To verify the effectiveness of the present application in the power system, synchronous generators G07 and G09 in the model are replaced with 100 doubly-fed wind turbines, and a virtual inertia control link is set. Each doubly-fed wind turbine has a capacity of 7 MW and output power of 6.3 MW. Due to the lack of the geographical location information of the 10-machine 39-node system, a coordinate of each node of the system is re-designated here to obtain a virtual geographical information diagram of the system, as shown in FIG. 3.

To verify the effectiveness of the method for determining node equivalent inertia of a power system provided in this embodiment, node equivalent inertia in a left region of the 10-machine 39-node system is set to be greater than node equivalent inertia in a right region of the 10-machine 39-node system. Rated capacities and inertia constants of multiple generators are shown in Table 1.

**Table 1**

| Generator | Rated Capacity/MW | Inertia Constant/s |
|---|---|---|
| G01 | 3000 | 7.8 |
| G02 | 700 | 7.5 |
| G03 | 800 | 7.3 |
| G04 | 800 | 3.2 |
| G05 | 600 | 3.7 |
| G06 | 800 | 3.6 |
| G07 | 700 | 3.5 |
| G08 | 700 | 7.2 |
| G09 | 1000 | 3.2 |
| G10 | 1000 | 7.3 |

A load power disturbance with an amplitude of 200 MW is applied to each of the multiple nodes, and frequency data of the multiple nodes after the disturbances are applied are input into the fitting model to select the optimal model structures and model coefficients, as shown in Table 2.

**Table 2**

| Node No. | Optimal Model Structure | Node No. | Optimal Model Structure | Node No. | Optimal Model Structure |
|---|---|---|---|---|---|
| Node 1 | tenth-order polynomial and exponential function | Node 14 | seventh-order polynomial and exponential function | Node 27 | ninth-order polynomial and power function |
| Node 2 | tenth-order polynomial | Node 15 | tenth-order polynomial and Sigmoid function | Node 28 | seventh-order polynomial and exponential function |
| Node 3 | ninth-order polynomial and Gaussian function | Node 16 | tenth-order polynomial | Node 29 | tenth-order polynomial and exponential function |
| Node 4 | ninth-order polynomial and power function | Node 17 | tenth-order polynomial and exponential function | Node 30 | ninth-order polynomial and Gaussian function |
| Node 5 | tenth-order polynomial | Node 18 | eighth-order polynomial and exponential function | Node 31 | eighth-order polynomial and exponential function |
| Node 6 | tenth-order polynomial and exponential function | Node 19 | ninth-order polynomial and power function | Node 32 | tenth-order polynomial |
| Node 7 | ninth-order polynomial and Gaussian function | Node 20 | eighth-order polynomial and exponential function | Node 33 | eighth-order polynomial and Sigmoid function |
| Node 8 | ninth-order polynomial and exponential function | Node 21 | eighth-order polynomial and Sigmoid function | Node 34 | ninth-order polynomial and exponential function |
| Node 9 | ninth-order polynomial and power function | Node 22 | ninth-order polynomial and Gaussian function | Node 35 | ninth-order polynomial and power function |
| Node 10 | ninth-order polynomial and exponential function | Node 23 | ninth-order polynomial and exponential function | Node 36 | ninth-order polynomial |
| Node 11 | tenth-order polynomial and exponential function | Node 24 | tenth-order polynomial and exponential function | Node 37 | tenth-order polynomial and exponential function |
| Node 12 | eighth-order polynomial and exponential function | Node 25 | eighth-order polynomial and Sigmoid function | Node 38 | eighth-order polynomial and exponential function |
| Node 13 | eighth-order polynomial and Sigmoid function | Node 26 | ninth-order polynomial and Gaussian function | Node 39 | ninth-order polynomial |

A frequency change rate of each node at the initial moment after each node is disturbed is calculated according to the optimal model structures and model coefficients of the multiple nodes to calculate the node equivalent inertia of the multiple nodes. The spatial distribution characteristics of the inertia of the power system are presented in the form of a heat map, as shown in FIG. 4.

As can be seen from FIG. 4, different nodes have different node equivalent inertia. Since G1 has the largest inertia time constant and a relatively large capacity, the node 39 close to G1 has the largest node equivalent inertia. Inertia time constants of multiple generators in the right region are less than those in the left region, so the node equivalent inertia on the left side is greater than the node equivalent inertia on the right side, which can be reflected in FIG. 4, thereby verifying the effectiveness of the method for determining node equivalent inertia of a power system provided in this embodiment.

In conclusion, in this embodiment, the multiple fitting models are used for calculating the frequency change rates of the multiple nodes at the initial moment after the multiple nodes are disturbed, and the node equivalent inertia of the multiple nodes are calculated using the equivalent inertia of the power system according to the relationship between the frequency change rate of the target node after the disturbance occurs and the frequency change rate of the inertia center node after the disturbance occurs. In addition to the traditional polynomial fitting, the structure of the fitting model further includes the exponential function, the logarithmic function, the power function and other structures as well as the combination structures combining two types of models to provide the fitting effects of multiple frequency curves. The fitting effects are good. Selecting the curve with the best fitting effect can significantly reduce the error of fitting the frequency curve and relatively accurately calculate the equivalent inertia of each node in the power system, thereby improving the accuracy of calculating the equivalent inertia of each node in the power system and better reflecting the spatial distribution characteristics of the inertia.

### Embodiment two

This embodiment provides a system for determining node equivalent inertia of a power system. Since the principle by which the system solves the problems is similar to the method for determining node equivalent inertia of a power system provided in the preceding embodiment one, the implementation of the system may be referred to the implementation of the method for determining node equivalent inertia of a power system provided in embodiment one.

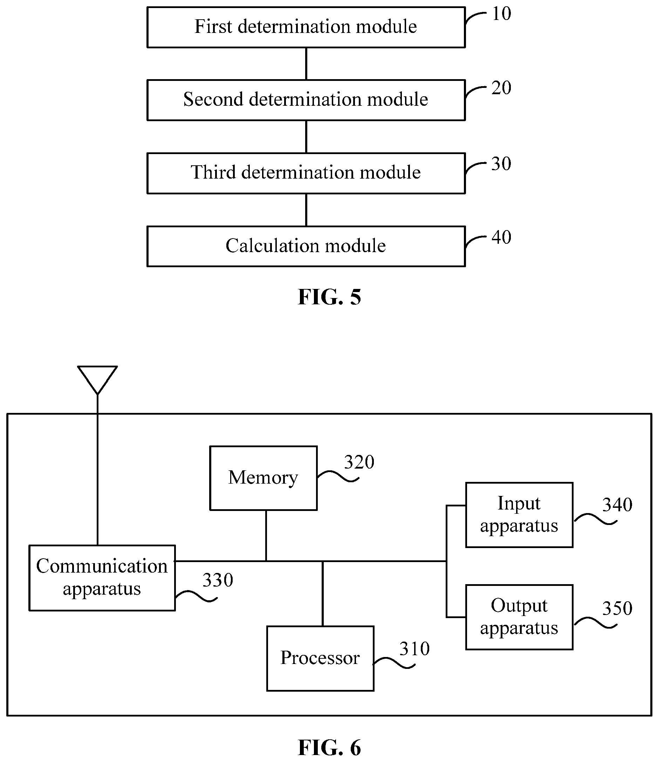

As shown in FIG. 5, the system for determining node equivalent inertia of a power system includes a first determination module 10, a second determination module 20, a third determination module 30 and a calculation module 40.

The first determination module 10 is configured to determine equivalent inertia of the power system.

The second determination module 20 is configured to apply a load power disturbance to multiple nodes in the power system to determine one node in the power system as an inertia center node using frequencies of the multiple nodes after the disturbance is applied.

The third determination module 30 is configured to fit the frequencies of the multiple nodes after the load power disturbance is applied in the power system into a curve of frequency changing with time to determine frequency change rates of the multiple nodes after the disturbance occurs.

The calculation module 40 is configured to calculate equivalent inertia of a target node according to a relationship between a frequency change rate of the target node after the disturbance occurs and a frequency change rate of the inertia center node after the disturbance occurs and the equivalent inertia of the power system.

For example, the first determination module includes a first calculation unit.

The first calculation unit is configured to calculate the equivalent inertia H_{sys} of the power system according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$ where H_{g,i} is an inertia constant of a synchronous generator i, S_{g,i} is a rated capacity of the synchronous generator i, I is the total number of synchronous generators, H_{v,j} is an inertia constant of a new energy generator j with virtual inertia control technology, S_{v,j} is a rated capacity of the new energy generator j with the virtual inertia control technology, J is the total number of new energy generators with the virtual inertia control technology, Hₚ is an inertia constant of a load, Sₚ is a rated capacity of the load, S_{v,k} is a rated capacity of a new energy generator k without the virtual inertia control technology, and K is the total number of new energy generators without the virtual inertia control technology.

For example, the second determination module includes a second calculation unit, a third calculation unit and a first determination unit.

The second calculation unit is configured to calculate a Pearson correlation coefficient of a frequency of each of the multiple nodes after the disturbance is applied and a frequency of another node of the multiple nodes after the disturbance is applied according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$ where P_{fm} , fₙ is a Pearson correlation coefficient of a frequency fₘ of a node m after the disturbance is applied and a frequency fₙ of a node n after the disturbance is applied in the power system, U is the total number of frequency sequences in a frequency of a node after the disturbance is applied, fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ.

The third calculation unit is configured to calculate a sum of Pearson correlation coefficients of each of the multiple nodes according to the following formula: ${P}_{m} = {\sum }_{n = 1 , n \neq m}^{s} {P}_{{f}_{m} {, f}_{n}} ;$ where Pₘ is a sum of Pearson correlation coefficients of the node m, and s is the total number of nodes in the power system.

The first determination unit is configured to use a node with a largest sum of Pearson correlation coefficients in the power system as the inertia center node.

For example, the third determination module includes a first acquisition unit, a construction unit, a coefficient solving unit, a fourth calculation unit, a second acquisition unit, a second determination unit and a third determination unit.

The first acquisition unit is configured to acquire a frequency fₘ of a node m, where fₘ = {fₘ₁, fₘ₂, ..., f_{mU}}, and U is the total number of frequency sequences in the frequency of the node after the disturbance is applied.

The construction unit is configured to construct multiple fitting models, including a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function.

The coefficient solving unit is configured to use a residual quadratic sum as a target function in an iterative process of a target fitting model to solve a coefficient of the target fitting model. When a change in the residual quadratic sum is less than a first preset value, or when an absolute value of a gradient is less than a second preset value, or when the maximum allowable number of iterations is reached, a coefficient of the target fitting model at the current number of iterations is output.

The fourth calculation unit is configured to calculate a fitting error ε of the target fitting model according to the following formula: $ε = {\sum }_{u = 1}^{U} \left|{f}_{mu}-{f}_{mu}^{′}\right| ;$ where fₘᵤ is a u-th frequency sequence in fₘ, and ${f}_{max}^{′}$ is a u-th frequency sequence fitted at the node m by the target fitting model.

The second acquisition unit is configured to acquire fitting errors of multiple fitting models under multiple order polynomials within a target order.

The second determination unit is configured to use a fitting model corresponding to a minimum fitting error within the target order as a final fitting model, where an order of the final fitting model is an order corresponding to the minimum fitting error.

The third determination unit is configured to determine a frequency change rate of the node m after the disturbance occurs according to the frequency of the node m and the final fitting model of the node m.

For example, the calculation module includes a fifth calculation unit.

The fifth calculation unit is configured to calculate the equivalent inertia of the target node according to the following formula: ${H}_{q} = {H}_{sys} {lim}_{t \to 0} \frac{\frac{{df}_{sys}}{dt}}{\frac{{df}_{q}}{dt}} ;$ where H_{q} is equivalent inertia of a target node q in the power system, H_{sys} is the equivalent inertia of the power system, f_{sys} is a frequency of the inertia center node, t is time, f_{q} is a frequency of the target node q after the target node q is subjected to the load power disturbance, $\frac{{df}_{q}}{dt}$ denotes a frequency change rate of the target node q after the disturbance occurs, and $\frac{{df}_{sys}}{dt}$ denotes the frequency change rate of the inertia center node after the disturbance occurs.

For the working process of the above multiple modules, reference may be made to the corresponding content disclosed in embodiment one, which is not repeated here.

### Embodiment three

This embodiment provides an electronic device including a processor and a memory. When the processor executes computer programs stored in the memory, the method for determining node equivalent inertia of a power system in embodiment one is implemented.

For the process of the above method, reference may be made to the corresponding content disclosed in embodiment one, which is not repeated here.

FIG. 6 is a diagram illustrating the hardware structure of an electronic device according to an embodiment of the present application. As shown in FIG. 6, the electronic device of the present application includes a processor 310 and a memory 320. The electronic device may include one or more processors 310, with one processor 310 shown as an example in FIG. 6. The memory 320 is configured to store one or more programs. The one or more programs are executed by the one or more processors 310 to cause the one or more processors 310 to perform the method for determining node equivalent inertia of a power system of any embodiment of the present application.

The electronic device further includes a communication apparatus 330, an input apparatus 340, and an output apparatus 350. The processor 310, the memory 320, the communication apparatus 330, the input apparatus 340, and the output apparatus 350 in the electronic device may be connected via a bus or in other manners, where the connection via a bus is shown as an example in FIG. 6. The input apparatus 340 may receive inputted digital or character information and generate key signal input related to user settings and function control of the electronic device. The output apparatus 350 may include a display device such as a display screen. The communication apparatus 330 may include a receiver and a sender. The communication apparatus 330 is configured to perform information transceiving communication under the control of the processor 310. As a computer-readable storage medium, the memory 320 may be configured to store software programs, computer-executable programs, and modules, such as program instructions/modules corresponding to the method for determining node equivalent inertia of a power system of any embodiment of the present application. The memory 320 may include a program storage region and a data storage region. The program storage region may store an operating system and an application program required by at least one function. The data storage region may store data created depending on use of the electronic device. Additionally, the memory 320 may include a high-speed random-access memory and may further include a non-volatile memory, such as, at least one disk memory, at least one flash memory or other non-volatile solid-state memories. In some examples, the memory 320 may include memories remotely disposed relative to the processor 310, and these remote memories may be connected to the electronic device via a network. Examples of the network include, but are not limited to, the Internet, an intranet, a local area network, a mobile communication network, and a combination thereof.

### Embodiment four

This embodiment provides a computer-readable storage medium configured to store computer programs. When the computer programs are executed by a processor, the steps of the method for determining node equivalent inertia of a power system in embodiment one are implemented. The storage medium may be a non-transitory storage medium.

For the process of the above method, reference may be made to the corresponding content disclosed in embodiment one, which is not repeated here.

### Embodiment five

This embodiment provides a computer program product including computer-executable instructions or computer programs. When the computer-executable instructions or the computer programs are executed by a processor, the steps of the method for determining node equivalent inertia of a power system in embodiment one are implemented.

For the process of the above method, reference may be made to the corresponding content disclosed in embodiment one, which is not repeated here.

Multiple embodiments in this Description are described in a progressive manner. Each embodiment focuses on differences from other embodiments. The same or similar parts in the multiple embodiments may be understood by mutual reference. As for the system, the device, the storage medium and the computer program product disclosed in the embodiments, since the system, the device, the storage medium and the computer program product correspond to the method disclosed in the embodiments, the description of the system, the device, the storage medium and the computer program product is relatively simple. For related information, reference may be made to the description of the method.

It is apparent to those skilled in the art that the techniques in the embodiments of the present application may be implemented by means of software plus a necessary universe hardware platform. Based on this understanding, the technical solutions in the embodiments of the present application may essentially be embodied in the form of a software product. The computer software product may be stored in a storage medium, such as a read-only memory (ROM)/random-access memory (RAM), a magnetic disk or an optical disk, and includes several instructions for enabling a computer device (which may be a personal computer, a server or a network device) to perform the method in the embodiments of the present application or the method in some portions of the embodiments of the present application.

In some embodiments, computer-executable instructions may be provided in the form of programs, software, software modules, scripts or codes, written in any form of programming language (including compiled or interpreted languages, or declarative or procedural languages) and deployed in any form, including being deployed as standalone programs or as modules, components, subroutines, or other units suitable for use in a computing environment.

As an example, computer-executable instructions may, but do not necessarily, correspond to files in a file system, and may be stored in a portion of a file that holds other programs or data, for example, stored in one or more scripts in a Hypertext Markup Language (HTML) document, stored in a single file dedicated to the program in question, or stored in multiple coordinated files (for example, files storing one or more modules, subroutines or code portions).

As an example, computer-executable instructions may be deployed for execution on one electronic device, or on multiple electronic devices located on one site, or on multiple electronic devices distributed across multiple sites and interconnected via a communication network.

## Claims

1. A method for determining node equivalent inertia of a power system, comprising:
determining equivalent inertia of the power system;
applying a load power disturbance to a plurality of nodes in the power system to determine a node in the power system as an inertia center node using frequencies of the plurality of nodes after the load power disturbance is applied in the power system;
fitting the frequencies of the plurality of nodes into a curve of frequency changing with time to determine frequency change rates of the plurality of nodes after the load power disturbance occurs; and
calculating equivalent inertia of a target node according to a relationship between a frequency change rate of the target node after the load power disturbance occurs and a frequency change rate of the inertia center node after the load power disturbance occurs and the equivalent inertia of the power system.

2. The method for determining the node equivalent inertia of the power system according to claim 1, wherein determining the equivalent inertia of the power system comprises:
calculating the equivalent inertia H_{sys} of the power system according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$
wherein H_{g,i} is an inertia constant of a synchronous generator i, S_{g,i} is a rated capacity of the synchronous generator i, I is a total number of synchronous generators, H_{v,j} is an inertia constant of a new energy generator j with virtual inertia control technology, S_{v,j} is a rated capacity of the new energy generator j with the virtual inertia control technology, J is a total number of new energy generators with the virtual inertia control technology, Hₚ is an inertia constant of a load, Sₚ is a rated capacity of the load, S_{v,k} is a rated capacity of a new energy generator k without the virtual inertia control technology, and K is a total number of new energy generators without the virtual inertia control technology.

3. The method for determining the node equivalent inertia of the power system according to claim 1, wherein applying the load power disturbance to the plurality of nodes in the power system to determine the node in the power system as the inertia center node using the frequencies of the plurality of nodes after the load power disturbance is applied comprises:
calculating a Pearson correlation coefficient of a frequency of one node of the plurality of nodes after the load power disturbance is applied and a frequency of another node of the plurality of nodes after the load power disturbance is applied according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$
wherein P_{fm} , fₙ is a Pearson correlation coefficient of a frequency fₘ of a node m after the load power disturbance is applied and a frequency fₙ of a node n after the load power disturbance is applied in the power system, U is a total number of frequency sequences in a frequency of a node after the load power disturbance is applied, fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ;
calculating a sum of Pearson correlation coefficients of each of the plurality of nodes according to the following formula: ${P}_{m} = {\sum }_{n = 1 , n \neq m}^{s} {P}_{{f}_{m} {, f}_{n}} ;$
wherein Pₘ is a sum of Pearson correlation coefficients of the node m, and s is a total number of the plurality of nodes in the power system; and
using a node with a largest sum of Pearson correlation coefficients in the power system as the inertia center node.

4. The method for determining the node equivalent inertia of the power system according to claim 1, wherein fitting the frequencies of the plurality of nodes into the curve of frequency changing with time to determine the frequency change rates of the plurality of nodes after the load power disturbance occurs comprises:
acquiring a frequency fₘ of a node m, wherein fₘ = {fₘ₁, fₘ₂, ..., f_{mU}}, and U is a total number of frequency sequences in the frequency of the node m after the load power disturbance is applied;
constructing a plurality of fitting models comprising a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function;
using a residual quadratic sum as a target function in an iterative process of a target fitting model to solve a coefficient of the target fitting model, outputting a coefficient of the target fitting model at the current number of iterations in response to a change in the residual quadratic sum being less than a first preset value, or an absolute value of a gradient being less than a second preset value, or the maximum allowable number of iterations being reached;
calculating a fitting error ε of the target fitting model according to the following formula: $ε = {\sum }_{u = 1}^{U} \left|{f}_{mu}-{f}_{mu}^{′}\right| ;$
wherein fₘᵤ is a u-th frequency sequence in fₘ, and ${f}_{mn}^{′}$ is a u-th frequency sequence fitted at the node m by the target fitting model;
acquiring fitting errors of a plurality of fitting models under a plurality of order polynomials within a target order;
using a fitting model corresponding to a minimum fitting error within the target order as a final fitting model, wherein an order of the final fitting model is an order corresponding to the minimum fitting error; and
determining a frequency change rate of the node m after the disturbance occurs according to the frequency of the node m and the final fitting model of the node m.

5. The method for determining the node equivalent inertia of the power system according to claim 1, wherein calculating the equivalent inertia of the target node according to the relationship between the frequency change rate of the target node after the load power disturbance occurs and the frequency change rate of the inertia center node after the load power disturbance occurs and the equivalent inertia of the power system comprises:
calculating the equivalent inertia of the target node according to the following formula: ${H}_{q} = {H}_{sys} {lim}_{t \to 0} \frac{\frac{{df}_{sys}}{dt}}{\frac{{df}_{q}}{dt}} ;$
wherein H_{q} is equivalent inertia of a target node q in the power system, H_{sys} is the equivalent inertia of the power system, f_{sys} is a frequency of the inertia center node, t is time, f_{q} is a frequency of the target node q after the load power disturbance is applied to the target node q, $\frac{{df}_{q}}{dt}$ denotes a frequency change rate of the target node q after the load power disturbance occurs, and $\frac{{df}_{sys}}{dt}$ denotes the frequency change rate of the inertia center node after the load power disturbance occurs.

6. A system for determining node equivalent inertia of a power system, comprising:
a first determination module configured to determine equivalent inertia of the power system;
a second determination module configured to apply a load power disturbance to a plurality of nodes in the power system to determine one node in the power system as an inertia center node using frequencies of the plurality of nodes after load power disturbance is applied in the power system;
a third determination module configured to fit the frequencies of the plurality of nodes into a curve of frequency changing with time to determine frequency change rates of the plurality of nodes after the load power disturbance occurs; and
a calculation module configured to calculate equivalent inertia of a target node according to a relationship between a frequency change rate of the target node after the load power disturbance occurs and a frequency change rate of the inertia center node after the load power disturbance occurs and the equivalent inertia of the power system.

7. The system for determining the node equivalent inertia of the power system according to claim 6, wherein the first determination module comprises:
a first calculation unit configured to calculate the equivalent inertia H_{sys} of the power system according to the following formula: ${H}_{sys} = \frac{{\sum }_{i = 1}^{I} \left({H}_{g , i}{S}_{g , i}\right) + {\sum }_{j = 1}^{J} \left({H}_{v , j}{S}_{v , j}\right) + {H}_{p} {S}_{p}}{{\sum }_{i = 1}^{I} {S}_{g , i} + {\sum }_{j = 1}^{J} {S}_{v , j} + {\sum }_{k = 1}^{K} {S}_{v , k} + {S}_{p}} ;$
wherein H_{g,i} is an inertia constant of a synchronous generator i, S_{g,i} is a rated capacity of the synchronous generator i, I is a total number of synchronous generators, H_{v,j} is an inertia constant of a new energy generator j with virtual inertia control technology, S_{v,j} is a rated capacity of the new energy generator j with the virtual inertia control technology, J is a total number of new energy generators with the virtual inertia control technology, Hₚ is an inertia constant of a load, Sₚ is a rated capacity of the load, S_{v,k} is a rated capacity of a new energy generator k without the virtual inertia control technology, and K is a total number of new energy generators without the virtual inertia control technology.

8. The system for determining the node equivalent inertia of the power system according to claim 6, wherein the second determination module comprises:
a second calculation unit configured to calculate a Pearson correlation coefficient of a frequency of one node of the plurality of nodes after the load power disturbance is applied and a frequency of another node of the plurality of nodes after the load power disturbance is applied according to the following formula: ${P}_{{f}_{m} , {f}_{n}} = \frac{{\sum }_{u = 1}^{U} \left(\left({f}_{mu}-\overline{{f}_{m}}\right)\left({f}_{nu}-\overline{{f}_{n}}\right)\right)}{\sqrt{{\sum }_{u = 1}^{U} {\left({f}_{mu}-\overline{{f}_{m}}\right)}^{2} {\sum }_{u = 1}^{U} {\left({f}_{nu}-\overline{{f}_{n}}\right)}^{2}}} ;$
wherein P_{fm} , fₙ is a Pearson correlation coefficient of a frequency fₘ of a node m after the load power disturbance is applied and a frequency fₙ of a node n after the load power disturbance is applied in the power system, U is a total number of frequency sequences in a frequency of a node after the load power disturbance is applied, fₘᵤ is a u-th frequency sequence in fₘ, fₙᵤ is a u-th frequency sequence in fₙ, f̅ₘ̅ is an average value of U frequency sequences in fₘ, and f̅ₙ̅ is an average value of U frequency sequences in fₙ;
a third calculation unit configured to calculate a sum of Pearson correlation coefficients of each of the plurality of nodes according to the following formula: ${P}_{m} = {\sum }_{n = 1 , n \neq m}^{s} {P}_{{f}_{m} {, f}_{n}} ;$
wherein Pₘ is a sum of Pearson correlation coefficients of the node m, and s is a total number of the plurality of nodes in the power system; and
a first determination unit configured to use a node with a largest sum of Pearson correlation coefficients in the power system as the inertia center node.

9. The system for determining the node equivalent inertia of the power system according to claim 6, wherein the third determination module comprises:
a first acquisition unit configured to acquire a frequency fₘ of a node m, wherein fₘ = {fₘ₁, fₘ₂, ..., f_{mU}}, and U is a total number of frequency sequences in the frequency of the node m after the load power disturbance is applied;
a construction unit configured to construct a plurality of fitting models comprising a high-order polynomial, an exponential function, a logarithmic function, a power function, a Gaussian function, a Sigmoid function, a combination of the high-order polynomial and the exponential function, a combination of the high-order polynomial and the logarithmic function, a combination of the high-order polynomial and the power function, a combination of the high-order polynomial and the Gaussian function and a combination of the high-order polynomial and the Sigmoid function;
a coefficient solving unit configured to use a residual quadratic sum as a target function in an iterative process of a target fitting model to solve a coefficient of the target fitting model, output a coefficient of the target fitting model at the current number of iterations in response to a change in the residual quadratic sum being less than a first preset value, or an absolute value of a gradient being less than a second preset value, or the maximum allowable number of iterations being reached;
a fourth calculation unit configured to calculate a fitting error ε of the target fitting model according to the following formula: $ε = {\sum }_{u = 1}^{U} \left|{f}_{mu}-{f}_{mu}^{′}\right| ;$
wherein fₘᵤ is a u-th frequency sequence in fₘ, and ${f}_{mn}^{′}$ is a u-th frequency sequence fitted at the node m by the target fitting model;
a second acquisition unit configured to acquire fitting errors of a plurality of fitting models under a plurality of order polynomials within a target order;
a second determination unit configured to use a fitting model corresponding to a minimum fitting error within the target order as a final fitting model, wherein an order of the final fitting model is an order corresponding to the minimum fitting error; and
a third determination unit configured to determine a frequency change rate of the node m after the disturbance occurs according to the frequency of the node m and the final fitting model of the node m.

10. The system for determining the node equivalent inertia of the power system according to claim 6, wherein the calculation module comprises:
a fifth calculation unit configured to calculate the equivalent inertia of the target node according to the following formula: ${H}_{q} = {H}_{sys} {lim}_{t \to 0} \frac{\frac{{df}_{sys}}{dt}}{\frac{{df}_{q}}{dt}} ;$
wherein H_{q} is equivalent inertia of a target node q in the power system, H_{sys} is the equivalent inertia of the power system, f_{sys} is a frequency of the inertia center node, t is time, f_{q} is a frequency of the target node q after the load power disturbance is applied to the target node q, $\frac{{df}_{q}}{dt}$ denotes a frequency change rate of the target node q after the load power disturbance occurs, and $\frac{{df}_{sys}}{dt}$ denotes the frequency change rate of the inertia center node after the load power disturbance occurs.

11. An electronic device, comprising:
a processor, and
a memory configured to store instructions executable by the processor,
wherein the processor is configured to execute the instructions to perform the method for determining node equivalent inertia of a power system according to any one of claims 1 to 5.

12. A computer-readable storage medium, comprising instructions executed by a processor of an electronic device to enable the electronic device to perform the method for determining node equivalent inertia of a power system according to any one of claims 1 to 5.
